Europäisches Patentamt

(19) European Patent Office

Office européen des brevets

(11) Veröffentlichungsnummer: **0 086 902**
**B1**

(12) **EUROPÄISCHE PATENTSCHRIFT**

(45) Veröffentlichungstag der Patentschrift:
05.11.86

(21) Anmeldenummer: **82112082.1**

(22) Anmeldetag: **29.12.82**

(51) Int. Cl.⁴: **G 05 D 16/10**

(54) **Druckreduzierventil.**

(30) Priorität: **23.02.82 CH 1090/82**

(43) Veröffentlichungstag der Anmeldung:
**31.08.83 Patentblatt 83/35**

(45) Bekanntmachung des Hinweises auf die Patenterteilung:
**05.11.86 Patentblatt 86/45**

(84) Benannte Vertragsstaaten:
**AT BE CH DE FR GB IT LI NL SE**

(56) Entgegenhaltungen:
**CH-A-125 284**
**DE-A-2 733 854**
**GB-A-648 302**
**US-A-3 495 619**
**US-A-3 643 683**

(73) Patentinhaber: **WIRTH + SCHWAAR
FLUIDTECHNIK AG, Industriestrasse 30, CH- 8302
Kloten (CH)**

(72) Erfinder: **Wirth, Gustav, Leibrächistrasse 504, CH-
8185 Winkel (CH)**

(74) Vertreter: **Riederer, Conrad A., Dr.,
Bahnhofstrasse 10, CH- 7310 Bad Ragaz (CH)**

## Beschreibung

Die Erfindung betrifft ein Druckreduzierventil mit einem Ventilgehäuse, einem Stellorgan zum Einstellen des Arbeitsdruckes durch Anlegen einer vorbestimmten Kraft auf eine Seite eines Kolbens oder einer Membran, der bzw. die von der anderen Seite her vom Arbeitsdruck beaufschlagt wird, und mit einem mit dem Kolben oder der Membran des Stellorgans in Wirkverbindung stehenden Ventilglied, das einen Ventilkopf aufweist, der mit einem Ventilsitz zusammenarbeitet, um den Arbeitsdruck zu erzeugen (US-A- 34 95 619).

Druckluft als Energieträger ist etwa zehn mal teurer als elektrische Energie. Es ist daher von grosser Bedeutung, dass Druckluft nicht unnötig verschwendet wird. So kann es z. B. eine Verschwendung darstellen, wenn der Kolben eines doppelt wirkenden Zylinders mit einem Druck von 8 bar zur Arbeitsstellung und zur Ruhestellung gefahren wird, obwohl für die Rückstellung nur 2 bar notwendig wären.

Um Druckluft zu sparen sind Druckluftverschraubungen geschaffen worden, in welchen ein Ventil eingebaut ist, das nach der Art eines Ueberdruckventils arbeitet. Da eine Verschraubung ohnehin notwendig ist, um den Druckluftverbraucher an eine Druckluftquelle anzuschliessen, wird die zusätzliche Funktion als billiges Ventil sehr geschätzt. Nachteile ergeben sich jedoch bei Schwankungen im Primärdruck. Ist beispielsweise der Primärdruck normalerweise 8 bar und ist ein Arbeitsdruck von 2 bar erwünscht, so wird bei einem Absinken des Primärdrucks auf 6 bar überhaupt kein Arbeitsdruck mehr erzeugt, weil das Ventil nicht mehr öffnet. Auch bei normalen Druckverhältnissen wird der Arbeitsdruck relativ langsam erreicht, weil das Ventil zuerst geöffnet werden muss.

Wenn es auch möglich wäre, ein Druckregelventil zu bauen, so bot dessen Einbau in eine Verschraubung bisher unüberwindbare Schwierigkeiten, weil bei einem Druckregelventil grundsätzlich eine Membran oder ein Kolben notwendig ist, dessen Durchmesser um ein Vielfaches grösser sein muss, als der Durchmesser des Ventils. Dies wird nachstehend bei der Beschreibung eines Ausführungsbeispiels näher erläutert. Es genügt, hier noch festzuhalten, dass der Durchmesser des Ventilkopfes nicht beliebig klein gemacht werden kann, weil dadurch auch die Durchflussmenge verringert wird. Wegen dieser praktischen Unmöglichkeit, ein Druckregelventil in eine Verschraubung einzubauen, wurde dieser Weg bisher nicht beschritten.

Die Patentschrift GB-A-648 302 zeigt ein Druckreduzierventil, das ein Hilfsventil aufweist, um das Hauptventil zu steuern. Das Hauptventil besitzt ein Ventilglied, das einen Ventilkopf mit relativ kleinem Durchmesser und einem Kolben mit relativ grossem Durchmesser aufweist. Ueber das Hilfsventil kann der Kolben mit Primärdruck beaufschlagt werden, so dass das Hauptventil entgegen der Kraft einer starken Feder geöffnet wird. Eine Stelleinrichtung ist zum Einstellen des Arbeitsdrucks vorgesehen. Diese Stelleinrichtung besitzt eine durch ein Handrad justierbare Spindel, deren Ende mit dem Hilfsventil in Wirkverbindung ist. Im Betrieb wird durch den Arbeitsdruck eine Membran der Stelleinrichtung verformt, so dass die Spindel den Ventilteller des Hilfsventils bewegt, so dass der Kolben entsprechend beaufschlagt wird und den Ventilkopf des Hauptventils in die richtige Stellung bringt. Das beschriebene Druckreduzierventil ist relativ kompliziert, da es ausser dem Hauptventil noch ein Hilfsventil benötigt. Da ferner der Kolben des Hauptventils einen wesentlich grösseren Durchmesser besitzt als der Ventilkopf, ist es nicht möglich, ein Druckreduzierventil dieser Art zu miniaturisieren und in eine Verschraubung einzubauen.

Es ist daher Aufgabe der vorliegenden Erfindung, ein Druckreduzierventil zu bauen, das eine kleine Dimensionierung, insbesondere des Durchmessers, erlaubt und sich inbesondere zur Integrierung in eine Verschraubung eignet.

Gemäss der Erfindung wird dies dadurch erreicht, dass auf den Ventilkopf wirkende Kompensationsmittel vorgesehen sind, um die vom Primärdruck auf den Ventilkopf ausgeübte Kraft teilweise oder ganz zu kompensieren. Dies erlaubt es, die Fläche des Kolbens oder der Membran, auf die das Stellorgan zum Einstellen des Arbeitsdruckes einwirkt, klein zu gestalten, was eine gedrängte Bauweise erlaubt. Dies ermöglicht die Integrierung des Druckreduzierventils in eine Verschraubung.

Im Gegensatz zu anderen in Verschraubungen integrierte Ventile hat das erfindungsgemässe Druckreduzierventil den Vorteil, dass der durch ihn erzeugte Arbeitsdruck weitgehend unabhängig vom Primärdruck ist. Da das Ventil im drucklosen Zustand geöffnet ist, erfolgt der Aufbau des Arbeitsdruckes sehr rasch. Des weiteren sind zur Entlüftung keine zusätzlichen Ventile notwendig. Das Medium kann somit zurückströmen.

Zweckmässigerweise werden die Kompensationsmittel durch einen auf dem Ventilkopf des Ventilgliedes wirkenden Kolben oder eine Membran gebildet, welcher bzw. welche vom Primärdruck so beaufschlagt wird, dass er bzw. sie eine Kraft auf das Ventilglied ausübt, welche der vom Primärdruck auf den Ventilkopf ausgeübten Kraft entgegenwirkt. Dies erlaubt eine sehr einfache und billige Konstruktion des Druckventils. So kann der Ventilkopf und der Kolben durch ein einziges Teil, das Ventilglied, gebildet werden. Bei einer zweckmässigen Ausbildung des Druckreduzierventils wird das Ventilglied im Ventilgehäuse in einer Bohrung mit mehreren Abschnitten von verschiedenen Durchmessern gelagert. Eine solche Bohrung kann mit geringem Aufwand und daher recht billig erstellt werden. Dabei bildet vorteilhaft ein Abschnitt der Bohrung einen Zylinder für den Kolben des Ventilglieds. Die Bohrung hat somit eine Mehrfachfunktion, so dass keine zusätzliche Zylinderbohrung notwendig ist. Weiter erfolgt die Lagerung des Ventilglieds vorteilhaft an beiden Enden desselben. Auf diese Weise wird ein Verkanten oder Verklemmen desselben sicher vermieden. Die Lagerung am kolbenseitigen Ende des Ventilkörpers kann durch einen Zapfen erfolgen, dessen Durchmesser wesentlich kleiner ist als jener des Kolbens. Dadurch wird bewirkt, dass die wirksame Kolbenfläche lediglich durch den Durchmesser des Zapfens reduziert wird. Da zwecks Vereinfachung der Konstruktion der Kolbendurchmesser vorteilhaft etwas kleiner ist als der Ventildurchmesser, ist die Vermeidung eines weiteren Verlustes von wirksamer Kolbenfläche von Bedeutung, um die erwünschte hohe Kompensation der vom Primärdruck auf den Ventilkopf ausgeübten Kraft nicht zu beeinträchtigen. Eine besonders einfache Konstruktion des Ventils ergibt sich, wenn ein Abschnitt der Bohrung einen Zylinder für den Kolben des Ventilglieds bildet. Zur Dichtung ist dabei vorteilhaft am Zapfen ein Dichtring vorgesehen, der dichtend in einen der Abschnitte der Bohrung im Ventilgehäuse passt, und weiter ist zwischen Kolben und Zapfen ein Ansatz vorgesehen, der mit Spiel in den letztgenannten Abschnitt der Bohrung passt und den Dichtungsring am Herausrutschen aus diesem Abschnitt hindert. Auf diese Weise lässt sich die notwendige Dichtung auf kleinem Raum verwirklichen und das Spiel ermöglicht den Zutritt von Luft, so dass die wirksame Kolbenfläche lediglich um den Durchmesser des Zapfens verkleinert wird.

Ein in das Ventilgehäuse eingeschraubtes Gewindestück, das einen Anschlag für das Ventilglied bildet, kann zugleich als Anschlußstutzen für das Druckreduzierventil dienen. Dabei ist das Ventilglied vorteilhaft so ausgestaltet, dass am Ventilkopf ein rohrförmiger Absatz mit Querbohrungen angeordnet ist. Diese Gestaltung erlaubt einen guten Durchfluss des Druckmediums durch das Ventil. Eine Ventilschliessfeder kann in dem im Ventilgehäuse eingeschraubten Gewindestück gelagert sein und an den rohrförmigen Ansatz des Ventilglieds angreifen. Auch dies trägt dazu bei, das Ventil einfach zu gestalten.

Vorteilhaft kann das Ventilglied mittels des Zapfens auf den Kolben oder die Membran der Stelleinrichtung einwirken. Wegen der Kraft der Ventilschliessfeder steht der Zapfen des Ventilglieds normalerweise in Kontakt mit dem genannten Kolben oder der Membran der Stelleinrichtung. Es erübrigt sich somit eine mechanische Verbindung dieser Elemente miteinander, was zu einer einfachen und billigen Konstruktion des Ventils beiträgt. Des weiteren ist dadurch auch die sogenannte Rückströmbarkeit des Ventils gegeben.

Die Stelleinrichtung weist vorteilhaft eine Stellschraube auf, mit welcher der Anpressdruck einer Feder gegen den Kolben oder die Membran der Stelleinrichtung verändert werden kann, um den Arbeitsdruck festzusetzen. Dies erlaubt es, mit einfachen Mitteln zu regulieren. Gegebenenfalls kann auch eine Skala vorgesehen werden, an der der eingestellte Druck ablesbar ist. Diese Skala zeigt den absoluten Wert des Arbeitsdrucks an.

Weitere Einzelheiten und Vorteile der Erfindung ergeben sich aus der nachfolgenden Beschreibung von Ausführungsbeispielen der Erfindung.

Fig. 1 zeigt ein Druckreduzierventil ohne Sekundär-Entlüftung, die normalerweise für ein Sparventil nicht notwendig ist, und

Fig. 2 ein Druckreduzierventil wie in Figur 1, jedoch mit Sekundär-Entlüftung.

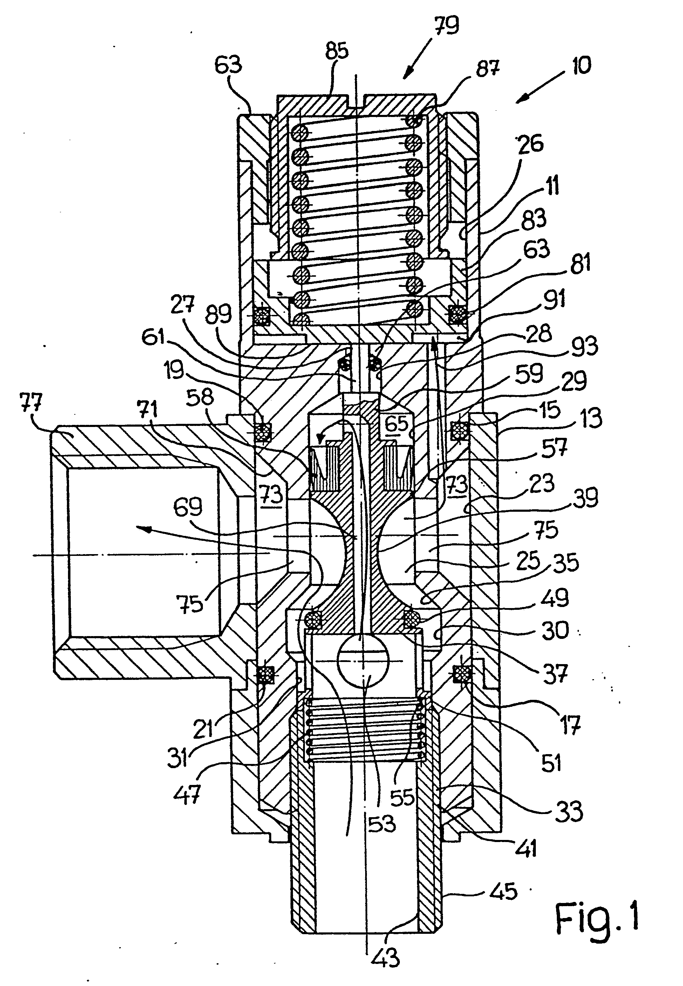

Wie Figur 1 zeigt, ist das Ventil als Verschraubung ausgestaltet und könnte daher auch als Verschraubung mit eingebautem Ventil bezeichnet werden. Die Erfindungsidee ist jedoch nicht auf Verschraubungen begrenzt, bietet jedoch dort wegen der Möglichkeit einer platzsparenden Ausführung des Ventils eine wichtige Anwendungsmöglichkeit. Das Druckregelventil 10 besteht beim gezeigten Ausführungsbeispiel im wesentlichen aus zwei zweckmässigerweise in einem rechten Winkel zueinander angeordneten Façondrehteilen 11 und 13, wobei in Nuten 15, 17 des Teiles 11 eingelegte Dichtungsringe 19, 21 für die nötige Abdichtung sorgen. Diese Gestaltung, bei welcher sich das Teil 11 in einer Querbohrung 23 des Teils 13 befindet, gestattet eine einfache Konstruktion des Ventils aus billig herzustellenden Teilen.

Das Teil 11 weist eine konzentrische Bohrung 25 mit Abschnitten 26 bis 31 von verschiedenen Durchmessern sowie einen Gewindeabschnitt 33 auf. Die Funktion der einzelnen Abschnitte 26 bis 31 wird nachstehend noch näher erläutert werden. Die konzentrische Bohrung 25 besitzt ferner einen Ventilsitz 35, der mit dem Ventilkopf 37 des Ventilglieds 39 zusammenarbeitet.

In den Gewindeabschnitt 33 ist das Gewindestück 41, das eine zentrale Bohrung 43 aufweist, eingeschraubt. Der herausragende Teil 45 des Gewindestücks 41 dient als Anschlussgewinde zum Anschluss des Druckventils an eine Druckquelle. Das Gewindestück 41 bildet einen Anschlag für das Ventilglied 39 und nimmt auch die Schliessfeder 47 für das Ventil auf. Das Ventilglied 39 besitzt am Ventilkopf 37 einen Ring 49 aus gummielastischem Material. Am Ventilkopf 37 ist ein rohrförmiger Absatz 51 mit Querbohrungen 53 ausgebildet. Der rohrförmige Absatz besitzt einen Flansch 55, an welchem die Schliessfeder 47 angreifen kann. Die Querbohrungen 53 ermöglichen den Durchfluss des Mediums zum Ventilsitz 35.

An der dem Ventilkopf 37 gegenüberliegenden Seite ist ein Kolben 57 ausgebildet, wobei zur besseren Dichtung eine Manschette 58 aus gummielastischem Material vorgesehen ist. Es folgt dann ein Ansatz 59 und anschliessend ein Zapfen 61. Der Ansatz 59 passt mit Spiel in den Abschnitt 28 und hat die Aufgabe, einen Dichtring 63 am Herausrutschen aus dem Abschnitt 28 zu hindern.

Der Kolben 57 hat die Aufgabe, als Kompensationsmittel zu dienen, um die vom Primärdruck auf den Ventilkopf 37 ausgeübte Kraft mindestens weitgehend zu kompensieren. Zu diesem Zweck muss der Kolben 57 praktisch die gleiche Fläche haben wie der Ventilkopf 37 und es muss im Raum 65, der durch den Abschnitt 29 gebildet wird, ebenfalls Primärdruck herrschen. Im Ventilglied 39 ist daher ein Kanal 69 vorgesehen, der von der Primärdruckseite her zum Zylinderraum 65 führt.

Es ist zu beachten, dass die Konstruktion des Ventils schon deshalb sehr einfach ist, weil der Ventilkopf 37 und der Kolben 57, abgesehen von den Dichtungsmitteln 49 und 58, ein einziges Teil, nämlich das Ventilglied 39, bilden. Die Lagerung dieses Ventilglieds 39 erfolgt an beiden Enden, nämlich am kolbenseitigen Ende durch den Zapfen 61 im Abschnitt 27 und am ventilkörperseitigen Ende durch den ringförmigen Ansatz 51 im Abschnitt 31.

Der Zapfen 61 besitzt einen Durchmesser, der wesentlich kleiner ist als jener des Kolbens 57. Um diesen Durchmesser des Zapfens 61 wird die wirksame Kolbenfläche verkleinert. Es ist zu beachten, dass der Ansatz 59 mit Spiel in den Abschnitt 28 greift, so dass auch im Raum dieses Abschnittes der gleiche Druck herrschen kann wie im Raum 65. Anders ausgedrückt, der Ansatz 59 vermindert die wirksame Fläche des Kolbens 27 nicht.

Es ist noch zu beachten, dass das Teil 11 im Bereich des Ventilglieds 39 eine Einschnürung 71 aufweist, durch die ein Hohlraum 73 zwischen dem Teil 11 und dem Teil 13 gebildet wird. Dieser Hohlraum wird durch eine Querbohrung 75 mit der koaxialen Bohrung 25 verbunden, so dass bei geöffnetem Ventil das Druckmedium vom Anschlußstutzen 45 zum Anschlussstutzen 77, der im Teil 13 ausgebildet ist, fliessen kann. Oben am Teil 11 ist eine Stellvorrichtung 79 vorgesehen. Diese besitzt einen mit einem Dichtring 81 versehenen Kolben 83, welcher sich im Abschnitt 26 bewegen kann. Eine Gewindebüchse 63 ist in diesen Abschnitt 26 eingepresst und nimmt eine Verstellschraube 85 auf, mit welcher der Druck einer Feder 87 verstellt werden kann, die den Kolben 83 normalerweise mit seiner Stirnfläche 89 gegen den Grund des durch den Abschnitt 26 gebildeten Zylinderraumes 91 presst. Der Zylinderraum 91 wird durch den Kanal 93 mit dem Raum 73 verbunden, so dass der Betriebsdruck auf den Kolben 83 wirken kann.

Nachstehend soll nun die Wirkungsweise des Ventils näher erläutert werden. Wird dem Anschlußstutzen 45 Druckluft zugeführt, so kann diese durch die Bohrung 43 und die Querbohrungen 53 am Ventilkopf 37 vorbei durch die Querbohrungen 75 und den Raum 73 zum Anschlußstutzen 77, an welchem der Verbraucher angeschlossen ist, fliessen. Dies erfolgt so lange, bis der Arbeitsdruck erreicht ist.

Wegen des Kanals 93 liegt der im Raum 73 herrschende Arbeitsdruck auch am Kolben 83 der Stellvorrichtung 79 an. Dadurch wird eine Kraft erzeugt, die der Feder 87 entgegen wirkt und bestrebt ist, den Kolben 83 nach oben zu verschieben, so dass der Ventilkopf 37 zur Anlage am Ventilsitz 35 kommt und ein weiterer Zufluss von Druckluft verhindert wird, so lange der Arbeitsdruck nicht absinkt.

Zum besseren Verständnis der Wirkungsweise des Ventils wird am besten untersucht, welche Bedingungen erfüllt sein müssen, damit das Ventil geschlossen bleibt.

Es ist bereits festgestellt worden, dass zur Schliessung des Ventils, ein Zustand erreicht werden muss, wo die auf den Kolben 83 von unten nach oben wirkenden Kräfte mindestens so gross sein müssen, dass sie der Kraft der Feder 87 in der Schließstellung des Ventils genügend entgegenwirken, um eine Oeffnung des Ventils zu verhindern. Bei den Kräften, die den Kolben 83 entgegen der Kraft der Feder 87 festhalten, handelt es sich in erster Linie um die Kraft, die vom Arbeitsdruck auf den Kolben 83 ausgeübt wird. Des weiteren handelt es sich um die Kraft, die das Ventilglied mit dem Zapfen 27 auf den Kolben 83 ausübt. Diese Kraft ist jedoch sehr gering. Dass dem so ist, sind die Kompensationsmittel schuld, welche die vom Primärdruck auf den Ventilkopf 37 ausgeübte Kraft mindestens teilweise kompensieren. Da nämlich bei geschlossenem Ventil der Primärdruck über den Kanal 69 auch in der Kammer 65 wirksam ist, wird dort auf den Kolben 57 eine Kraft ausgeübt, welche die auf den Ventilkopf 37 ausgeübte Kraft weitgehend kompensiert. Dies ist von wesentlicher Bedeutung für den Bau des Ventils, weil dadurch der Durchmesser des Ventils klein bemessen werden kann. Dies wäre nämlich nicht der Fall, wenn der Primärdruck nur auf den Ventilteller 37 und nicht auch zusätzlich in entgegengesetzter Richtung auf den Kolben 57 wirken würde. Die Feder 87 müsste nämlich dann, wie dies bei vorbekannten Ventilen der Fall ist, stark genug bemessen werden, um das Ventil bei ungenügendem Arbeitsdruck öffnen zu können. Dies würde aber bedingen, dass der Kolben 83 so gross bemessen werden müsste, dass dieser einer entsprechend stärker dimensionierten Feder 87 entgegenwirken könnte, wenn das Ventil geschlossen werden muss. Dies lässt sich leicht an einem Beispiel erklären. Wenn keine erfindungsgemässe Kompensation vorgenommen würde, so müsste bei einem Primärdruck von 8 bar und einem Arbeitsdruck von 1 bar der Kolben 83 eine acht mal grössere Fläche aufweisen als der Ventilteller, um ein Schliessen des Ventils zu ermöglichen. Nun kann aber aus konstruktiven Gründen der Ventilteller nicht beliebig klein gemacht werden. Dies würde den Durchfluss zu stark drosseln. Der Durchmesser des Ventils 37 muss somit in einem bestimmten Verhältnis zur Nennweite des Anschlussgewindes stehen. So darf beispielsweisege gemäss Norm der Durchmesser des Ventiltellers nicht weniger als 6 mm betragen, wenn das Anschlussgewinde von 1/4 Zoll beträgt.

Dank der oben beschriebenen Ausbildung des Ventils ist es möglich, den Kolben 83 mit relativ kleinem Durchmesser auszubilden, so dass er wenig Platz beansprucht und so den Bau eines Ventils mit kleinen Ausmassen ermöglicht. Wie einleitend erwähnt, ist es also möglich, das Ventil als eine Druckluftanschlußschraube auszugestalten.

Zu diesem Zwecke wird denn auch das Teil 11 vorteilhaft aus Sechskantmaterial gefertigt, so dass das Ventil mit Leichtigkeit unter Zuhilfenahme eines Schraubenschlüssels in ein Gewinde eingeschraubt werden kann.

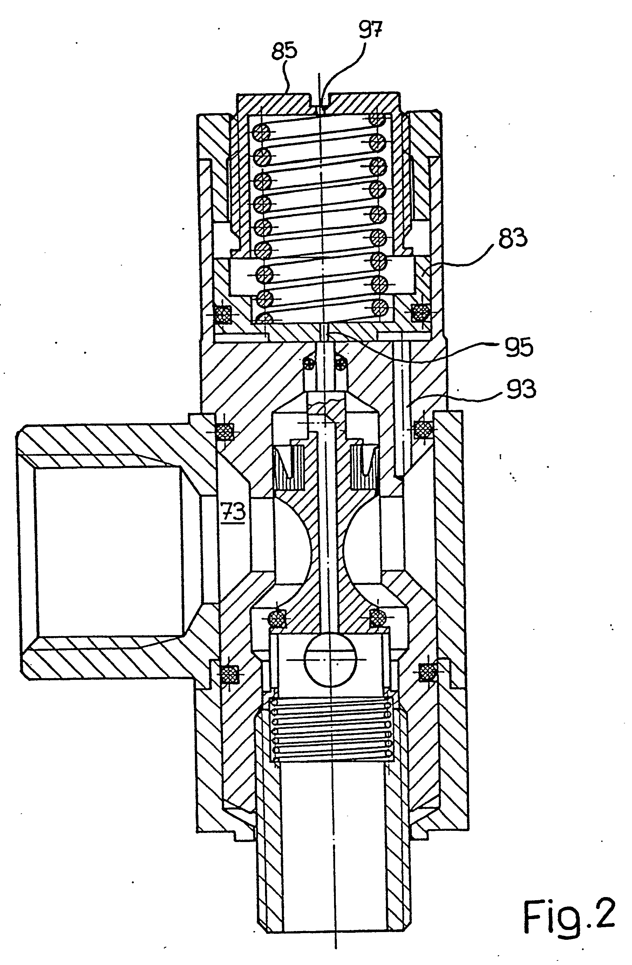

Die Ausführungsform gemäss Fig. 2 unterscheidet sich von jener der Fig. 1 lediglich durch die Bohrung 95 im Kolben 83 und die Entlüftungsöffnung 97 in der Schraube 85. Es handelt sich somit beim Gegenstand von Fig. 2 um ein Druckreduzierventil mit Sekundärentlüftung. Wenn der Druck in der Kammer 73 grösser wird als der eingestellte Arbeitsdruck, so wird der Kolben 83 vom Zapfen 61 abgehoben. Der Druck wird somit über den Kanal 93, die Bohrung 95 und die Entlüftungsöffnung 97 abgelassen. Im übrigen ist das Ventil genau gleich aufgebaut wie jenes gemäss Fig. 1, so dass auf die vorherige Beschreibung verwiesen werden kann.

**Patentansprüche**

1. Druckreduzierventil mit einem Ventilgehäuse (11, 13), einer Stelleinrichtung (79) zum Einstellen des Arbeitsdrucks durch Anlegen einer vorbestimmten Kraft auf eine Seite eines Kolbens (83) oder einer Membran, der bzw. die von der anderen Seite her vom Arbeitsdruck beaufschlagt wird, und einem mit dem Kolben (83) oder der Membran der Stelleinrichtung (79) in Wirkverbindung stehenden Ventilglied (39), das einen Ventilkopf (37) aufweist, der mit einem Ventilsitz (35) zusammenarbeitet, um den Arbeitsdruck zu erzeugen, dadurch gekennzeichnet, dass auf den Ventilkopf (37) wirkende Kompensationsmittel (57) vorgesehen sind, um die vom Primärdruck auf den Ventilkopf (37) ausgeübte Kraft teilweise oder ganz zu kompensieren.

2. Druckreduzierventil nach Anspruch 1, dadurch gekennzeichnet, dass die Kompensationsmittel durch einen auf den Ventilkopf (37) des Ventilglieds (39) wirkenden Kolben (57) oder eine Membran gebildet werden, welcher bzw. welche vom Primärdruck so beaufschlagt wird, dass er bzw. sie eine Kraft auf das Ventilglied (39) ausübt, welche der vom Primärdruck auf den Ventilkopf (37) ausgeübten Kraft entgegenwirkt.

3. Druckreduzierventil nach einem der Ansprüche 1 oder 2 dadurch gekennzeichnet, dass der Ventilkopf (37) und der Kolben (57) durch ein einziges Teil, das Ventilglied (39), gebildet werden.

4. Druckreduzierventil nach einem der Ansprüche 1 bis 3, dadurch gekennzeichnet, dass im Ventilglied (39) ein Kanal (69) von der Primärdruckseite zum genannten Kolben (57) vorgesehen ist, um diesen mit Primärdruck zu beaufschlagen.

5. Druckreduzierventil nach einem der Ansprüche 1 bis 4, dadurch gekennzeichnet, dass das Ventilglied (39) im Ventilgehäuse (11) in einer Bohrung (25) mit mehreren Abschnitten (26 bis 31) von verschiedenen Durchmessern gelagert ist.

6. Druckreduzierventil nach Anspruch 5, dadurch gekennzeichnet, dass die Lagerung des Ventilgliedes (39) an beiden Enden (61, 51) desselben erfolgt.

7. Druckreduzierventil nach Anspruch 6, dadurch gekennzeichnet, dass die Lagerung am kolbenseitigen Ende des Ventilgliedes durch einen Zapfen (61) erfolgt, dessen Durchmesser wesentlich kleiner ist als jener des Kolbens (57).

8. Druckreduzierventil nach einem der Ansprüche 5 bis 7, dadurch gekennzeichnet, dass ein Abschnitt (29) der Bohrung (25) einen Zylinder für den Kolben (57) des Ventilglieds (39) bildet.

9. Druckreduzierventil nach Anspruch 7 oder 8, dadurch gekennzeichnet, dass am Zapfen (61) ein Dichtring (63) vorgesehen ist, der dichtend in einen (28) der Abschnitte der Bohrung (25) im Ventilgehäuse (11) passt, und dass zwischen Kolben (57) und Zapfen (61) ein Ansatz (59) vorgesehen ist, der mit Spiel in den letztgenannten Abschnitt (28) passt und den Dichtring (63) am Herausrutschen aus diesem Abschnitt (28) hindert.

10. Druckreduzierventil nach einem der Ansprüche 1 bis 9, dadurch gekennzeichnet, dass ein in das Ventilgehäuse (11) eingeschraubtes Gewindestück (41), das einen Anschlag für das Ventilglied (39) bildet, als Anschlußstutzen (45) dient.

11. Druckreduzierventil nach Anspruch 10, dadurch gekennzeichnet, dass am Ventilkopf (37) des Ventilglieds (39) ein Absatz (51) mit Querbohrungen (53) angeordnet ist.

12. Druckreduzierventil nach Anspruch 10 oder 11, dadurch gekennzeichnet, dass eine Ventilschliessfeder (47) in dem im Ventilgehäuse (11) eingeschraubten Gewindestück (41) gelagert ist und an das Ventilglied (39) angreift.

13. Druckreduzierventil nach einem der Ansprüche 7 bis 12, dadurch gekennzeichnet, dass das Ventilglied (39) mittels des Zapfens (61) auf den Kolben (83) oder die Membran der Stelleinrichtung (79) einwirken kann, jedoch mit diesem nicht verbunden ist.

14. Druckreduzierventil nach Anspruch 13, dadurch gekennzeichnet, dass die Stelleinrichtung eine Stellschraube (85) aufweist, mit welcher der Anpressdruck einer Feder (87) gegen den Kolben (83) oder die Membran der Stelleinrichtung (79) verändert werden kann, um den Arbeitsdruck festzulegen.

15. Druckreduzierventil nach Anspruch 5, dadurch gekennzeichnet, dass die Bohrung (25) mit den mehreren Abschnitten (26 bis 31) von verschiedenen Durchmessern sich in einem Decolltageteil (11) befindet, das mit Dichtringen (19, 21) in einer Querbohrung (23) eines weiteren, als Anschlußstutzen (77) dienenden Decolltageteil (13) angeordnet ist.

16. Druckreduzierventil nach einem der Ansprüche 1 bis 15, gekennzeichnet durch Mittel zur Entlüftung, die aus einer Bohrung (95) und einer Öffnung (97) bestehen.

**Claims**

1. Pressure reducing valve comprising a valve housing (11, 13), a setting device (79) for setting the work pressure by application of a predetermined force on one side of a piston (83) or a diaphragma which is exposed on the opposite side to work pressure, and a valve member (39) which is in operative connection with the piston (83) or diaphragma of the setting device (7a) and comprises a valve head (37) cooperating with a valve seat (35) to provide the work pressure, characterized in that compensation means (57) are provided for partly or fully compensating the force excerted by primary pressure on the valve head (37).

2. Pressure reducing valve as claimed in claim 1, characterized in that the compensation means are provided by a piston (57) or a diaphragma acting on the valve head (37) of the valve member (39), said piston (57) or diaphragma being exposed to primary pressure in such manner as to apply a force to oppose to the force applied on the valve head (37) by the primary pressure.

3. Pressure reducing valve as claimed in claim 1 or 2, characterized in that the valve head (37) and the piston (57) are formed by a single part, the valve member (39).

4. Pressure reducing valve as claimed in one of the claims 1 to 3, characterized in that in the valve member (39) a duct (69) is provided, said duct (69) extending from the side of primary pressure to said piston (57) to apply primary pressure on said piston (57).

5. Pressure reducing valve as claimed in one of the claims 1 to 4, characterized in that the valve member (39) is located in a bore (25) of the valve housing, said bore (25) having several sections (26 to 31) of different diameters.

6. Pressure reducing valve as claimed in claim 5, characterized in that the valve member (39) is slidably supported on both of its ends (61, 51).

7. Pressure reducing valve as claimed in claim 6, characterized in that on the side of the piston (57) the valve member (39) is slidably supported by a stud (61) whose diameter is substantially smaller than the diameter of the piston (57).

8. Pressure reducing valve as claimed in one of the claims 5 to 7, characterized in that a section (29) of the bore (25) provides a cylinder for the piston (57) of valve member (39).

9. Pressure reducing valve as claimed in claim 7 or 8, characterized in that on the stud (61) a sealing ring (63) is provided, said sealing ring fitting sealingly in one (28) of the sections of the bore (25) in the valve housing (11), and in that between piston (57) and stud (61) a shoulder (59) is provided, said shoulder (59) fitting with clearance into said section (28) and preventing said sealing ring (63) from gliding out of said section (28).

10. Pressure reducing valve as claimed in one of the claims 1 to 9, characterized in that a threaded piece (41) threaded into the valve housing (11) and forming an abutment for the valve member (39) serves as connecting piece (45).

11. Pressure reducing valve as claimed in claim 10, characterized in that at the valve head (37) of the valve member (39) a neck (51) comprising transversal bores (53) is provided.

12. Pressure reducing valve as claimed in claim 10 or 11, characterized in that a valve closing spring (47) located in the threaded piece (41) threaded into the valve housing (11) is biased against the valve member (39).

13. Pressure reducing valve as claimed in one of the claims 7 to 12, characterized in that the valve member (39) is capable to act on the piston (83) or the diaphragma of the setting device (79) by means of the stud (61), but is not connected to said piston (83) or diaphragma.

14. Pressure reducing valve as claimed in claim 13, characterized in that the setting device (79) comprises a set screw (85), by means of which the compression force of a spring (87) against the piston (83) or the diaphragma of the setting device (79) can be adjusted to set the working pressure.

15. Pressure reducing valve as claimed in claim 5, characterized in that the bore (25) comprising several sections (26 to 31) of different diameters is located in a turned piece (11) which is located in a transverse bore (23) of a further turned piece (13) serving as a connection piece (77).

16. Pressure reducing valve as claimed in one of the claims 1 to 15, characterized by venting means comprising a bore (95) and an opening (97).

**Revendications**

1. Réducteur de pression comprenant un carter (11, 13) de valve, un dispositif de réglage (79) pour régler la pression de travail par l'application d'une force prédéterminée d'un côté d'un piston (83) ou d'une membrane respectivement soumis, à partir de l'autre côté, à l'action de la pression de travail, ainsi qu'un organe obturateur (39) qui est en liaison efficace avec le piston (83) ou la membrane du dispositif de réglage et présente une tête obturatrice (37) coopérant avec un siège (35) de valve, afin d'engendrer la pression de travail, caractérisé par le fait que des moyens de compensation (57), agissant sur la tête obturatrice (37), sont prévus pour contrebalancer partiellement ou intégralement la force appliquée par la pression primaire à cette tête obturatrice (37).

2. Réducteur de pression selon la revendication 1, caractérisé par le fait que les moyens de compensation sont formés par un piston (57) ou une membrane qui agit sur la tête obturatrice (37) de l'organe obturateur (39) et qui est soumis à l'action de la pression primaire d'une manière telle qu'il applique, à l'organe obturateur (39), une force s'opposant à la force appliquée par la pression primaire à la tête obturatrice (37).

3. Réducteur de pression selon l'une des revendications 1 ou 2, caractérisé par le fait que la tête obturatrice (37) et le piston (57) sont formés par une seule et unique pièce, l'organe obturateur (39).

4. Réducteur de pression selon l'une des revendications 1 à 3, caractérisé par le fait qu'un canal (69) est prévu dans l'organe obturateur (39), du côté pression primaire jusqu'au piston précité (57), afin de faire agir la pression primaire sur ce dernier.

5. Réducteur de pression selon l'une des revendications 1 à 4, caractérisé par le fait que l'organe obturateur (39) est monté, dans le carter (11) de valve, à l'intérieur d'un alésage (25) comprenant plusieurs tronçons (26 à 31) de diamètres différents.

6. Réducteur de pression selon la revendication 5, caractérisé par le fait que le montage de l'organe obturateur (39) est assuré aux deux extrémités (61, 51) de ce dernier.

7. Réducteur de pression selon la revendication 6, caractérisé par le fait que le montage à l'extrémité de l'organe obturateur située côté piston est assuré par l'intermédiaire d'un tenon (61), dont le diamètre est notablement plus petit que celui du piston (57).

8. Réducteur de pression selon l'une des revendications 5 à 7, caractérisé par le fait qu'un tronçon (29) de l'alésage (25) forme un cylindre pour le piston (57) de l'organe obturateur (39).

9. Réducteur de pression selon la revendication 7 ou 8, caractérisé par le fait qu'une bague d'étanchéité (63), prévue sur le tenon (61), s'ajuste hermétiquement dans l'un (28) des tronçons de l'alésage (25) pratiqué dans le carter (11) de valve; et par le fait qu'il est prévu, entre le piston (57) et le tenon (61), un appendice (59) qui s'ajuste avec jeu dans le tronçon (28) cité en dernier lieu et qui empêche la bague d'étanchéité (63) de riper hors de ce tronçon (28).

10. Réducteur de pression selon l'une des revendications 1 à 9, caractérisé par le fait qu'une pièce filetée (41), vissée dans le carter (11) de valve et formant une butée pour l'organe obturateur (39), sert de manchon de raccordement (45).

11. Réducteur de pression selon la revendication 10, caractérisé par le fait qu'un organe (51) en décrochement, percé de trous transversaux (53), est disposé sur la tête obturatrice (37) de l'organe obturateur (39).

12. Réducteur de pression selon la revendication 10 ou 11, caractérisé par le fait qu'un ressort (47) de fermeture de la valve est logé dans la pièce filetée (41) vissée dans le carter (11) de valve, et est en prise avec l'organe obturateur (39).

13. Réducteur de pression selon l'une des revendications 7 à 12, caractérisé par le fait que l'organe obturateur (39) agit au moyen du tenon (61) sur le piston (83) ou la membrane du dispositif de réglage (79), sans lui être toutefois assujetti.

14. Réducteur de pression selon la revendication 13, caractérisé par le fait que le dispositif de réglage présente une vis de réglage (85), à l'aide de laquelle il est possible de faire varier la force de compression d'un ressort (87) contre le piston (83) ou la membrane du dispositif de reglage (79), de manière à fixer la pression de travail.

15. Réducteur de pression selon la revendication 5, caractérisé par le fait que l'alésage (25) comprenant la pluralité de tronçons (26 à 31) de diamètres différents est façonné dans une pièce décolletée (11) disposée, avec des bagues d'étanchéité (19, 21), dans un alésage transversal (23) d'une autre pièce décolletée (13) servant de manchon de raccordement (77).

16. Réducteur de pression selon l'une des revendications 1 à 15, caractérisé par des moyens d'échappement se composant d'un perçage (95) et d'un orifice (97).

Fig.1

Fig.2